# EUROPÄISCHE PATENTSCHRIFT

(11) **EP 4 017 710 B1**
(45) Veröffentlichungstag und Bekanntmachung des Hinweises auf die Patenterteilung: **30.08.2023**
(21) Anmeldenummer: 20747405.7
(22) Anmeldetag: 28.07.2020
(51) Int. Cl.: B29C 70/44

(54) **VERFAHREN ZUR HERSTELLUNG VON FORMTEILEN AUS FASERVERBUND-WERKSTOFF**
METHOD FOR PRODUCING MOLDED PARTS FROM FIBER COMPOSITE MATERIAL
PROCÉDÉ DE FABRICATION DE PIÈCES MOULÉES À PARTIR D'UN MATÉRIAU COMPOSITE À BASE DE FIBRES

(30) Priorität: 22.08.2019 DE 102019005911
(43) Veröffentlichungstag der Anmeldung: 29.06.2022
(73) Patentinhaber: Siempelkamp Maschinen- und Anlagenbau GmbH, 47803 Krefeld (DE)
(72) Erfinder: KÖFFERS, Fabian, 47807 Krefeld (DE); SCHÖLER, Michael, 47509 Rheurdt (DE); SCHÜRMANN, Klaus, 41363 Jüchen (DE); SEBASTIAN, Lothar, 47239 Duisburg (DE)
(74) Vertreter: Cohausz & Florack
(86) Internationale Anmeldenummer: PCT/EP2020/071238
(87) Internationale Veröffentlichungsnummer: WO 2021/032415

(56) Entgegenhaltungen:
- WO-A1-02/102565

## Beschreibung

Die Erfindung betrifft ein Verfahren zur Herstellung von Formteilen aus Faserverbund-Werkstoff, umfassend die folgenden Schritte: a) Bereitstellen einer Presse mit einem ersten Presswerkzeug, einem zweiten Presswerkzeug, und einer Membran, wobei das erste Presswerkzeug und das zweite Presswerkzeug relativ zueinander bewegbar sind, wobei die Membran mit einem der Presswerkzeuge verbunden ist, wobei sich zwischen der Membran und dem mit ihr verbundenen Presswerkzeug eine Kavität für ein Arbeitsmedium ausbildet, wobei sich in dem anderen Presswerkzeug ein Arbeitsraum für ein Werkstück ausbildet, und wobei das Volumen des Arbeitsraumes bei geschlossener Presse durch eine Bewegung der Membran veränderbar ist, b) Bereitstellen von wenigstens einem Werkstück mit einem Werkstückvolumen, wobei das Werkstück eine Matrix und darin eingelegte Fasern aufweist, c) Einlegen des Werkstücks in den Arbeitsraum der Presse, d) Schließen der Presse, wobei der Arbeitsraum ein erstes Volumen einnimmt, e) Beaufschlagen des Werkstücks mit Druck und/oder mit Temperatur mittels der Membran, wobei der Arbeitsraum ein zweites Volumen einnimmt, und wobei aus dem Werkstück ein ausgehärtetes Formteil entsteht, und f) Öffnen der Presse und entnehmen des Formteils.

Bei Faserverbundwerkstoffen handelt es sich um Verbundwerkstoffe, die im Wesentlichen aus zwei Hauptkomponenten bestehen: aus verstärkenden Fasern sowie aus einem Kunststoff, in den die Fasern eingebettet sind ("Matrix" bzw. "Harz"). Durch die Kombination der beiden Hauptkomponenten kann erreicht werden, dass der Verbundwerkstoff insgesamt bessere Eigenschaften aufweist, als die beiden Komponenten allein betrachtet. Beispielsweise tragen die Fasern aufgrund ihrer hohen Zugfestigkeit in Faserrichtung dazu bei, die Zugfestigkeit des Verbundmaterials zu erhöhen. Die Matrix sorgt hingegen beispielsweise dafür, dass die Fasern in ihrer Position gehalten werden und vor mechanischen und chemischen Einflüssen geschützt werden.

Eine von mehreren Möglichkeiten der Herstellung von Bauteilen aus Faserverbundwerkstoffen basiert auf der Verwendung von vorgefertigten Faser-Harz-Halbzeugen (sog. "Prepregs", Kurzform von "preimpregnated fibers"). Bei derartigen Halbzeugen sind die Fasern mit einem noch nicht fertig reagierten Harzsystem versehen, so dass die Halbzeuge noch in flexibler Form vorliegen (z.B. bahnförmig, auf Rollen). Erst bei der Herstellung der Bauteile werden die Prepregs umgeformt und bei hohem Druck und hohen Temperaturen durch die Vollendung der chemischen Reaktion ausgehärtet. Dieser Schritt kann beispielsweise in einer Presse erfolgen.

Prepregs werden beispielsweise in der Luftfahrtindustrie in großen Mengen verarbeitet. Eine Herausforderung bei der Verarbeitung liegt darin, dass in der Luftfahrtindustrie häufig sehr komplexe Bauteilgeometrien erforderlich sind, beispielsweise aufgrund von Verstärkungselementen wie Stringern. Zudem soll der Montageaufwand verringert werden, was durch die Verwendung weniger, aber dafür größerer Bauteile erreicht werden soll. Die Kombination aus komplexen Geometrien und großen Bauteildimensionen stellt erhöhte Anforderungen an Vorrichtungen und Verfahren zur Herstellung dieser Bauteile. Eine Anforderung besteht beispielsweise darin, bei der Herstellung der Bauteile eine gleichmäßige Beaufschlagung mit Druck zu gewährleisten.

Eine Vorrichtung und ein Verfahren zum Herstellen von Bauteilen aus Faserverbundwerkstoff sind beispielsweise aus der DE 10 2017 113 595 A1 bekannt. Eine gleichmäßige Beaufschlagung des herzustellenden Bauteils mit Druck soll dadurch erreicht werden, dass eine flexible Membran auf das Bauteil einwirkt, wobei von der dem Bauteil abgewandten Seite der Membran ein Öldruck auf die Membran einwirkt. Die Membran wird also von einem Öldruck auf die Bauteiloberfläche gepresst. Auf diese Weise soll auch bei gekrümmten Bauteiloberflächen sichergestellt sein, dass der Öldruck allseitig, also hydrostatisch wirkt und somit die von der Membran auf die Bauteiloberfläche wirkende Kraft an jeder Stelle gleich groß ist, insbesondere auch die orthogonal auf die Bauteiloberfläche einwirkende Kraftkomponente.

Die Verwendung einer derartigen "Membranpresse" zur Herstellung von Bauteilen aus Faserverbundwerkstoff ist auch aus der US 2016/0297153 A1 bekannt.

Eine Herausforderung des Einsatzes einer Membran liegt darin, dass das herzustellende Bauteil in der Presse häufig nur einseitig von einer Membran mit Druck beaufschlagt werden kann, wobei dies aufgrund der begrenzten Verformbarkeit der Membran meist die geometrisch weniger komplex geformte Seite des Bauteils ist (z.B. die glatte Außenseite eines Flugzeugrumpfes). Die andere Seite des Bauteils, bei der es sich häufig um die geometrisch komplexer geformte Seite des Bauteils handelt (z.B. die Innenseite eines Flugzeugrumpfes) kann hingegen in vielen Fällen nicht direkt von der Membran mit Druck beaufschlagt werden, da dort häufig Verstärkungselemente vorgesehen sind, deren Form ein direktes Angreifen der Membran aufgrund ihrer komplexen Geometrie nicht zulassen. Diese Seite wird daher häufig in ein entsprechend geformtes Werkzeug eingelegt, wobei erforderlichenfalls (z.B. bei Hinterschneidungen) zusätzlich Kerne in das Werkzeug eingesetzt werden. Diese Anordnung führt dazu, dass eine gleichmäßige Druckverteilung auf der der Membran abgewandten Seite des herzustellenden Bauteils kaum sichergestellt werden kann. Dies liegt beispielsweise daran, dass die Werkzeuge und die Kerne von dem Werkstück abweichende Wärmeausdehnung aufweisen und sich daher bei ansteigenden und/oder abfallenden Temperaturen ein abweichendes Ausdehnungsverhalten aufweisen.

Aus dem Stand der Technik ist zudem das Dokument WO 02/ 102 565 A1 bekannt, welches ein Formwerkzeug zur Herstellung eines Bauteils mit einer Membran und ein Verfahren gemäß dem Oberbegriff des Anspruchs 1 offenbart.

Vor diesem Hintergrund liegt der Erfindung die Aufgabe zugrunde, bei der Herstellung von Formteilen aus Faserverbund-Werkstoff mit einer Membranpresse auch auf der der Membran abgewandten Seite des Formteils während Herstellung eine gleichmäßige Druckverteilung sicherzustellen.

Diese Aufgabe wird bei einem Verfahren nach dem Oberbegriff von Patentanspruch 1 dadurch gelöst, dass das erste Volumen des Arbeitsraumes geringer ist als das Werkstückvolumen, so dass das Werkstück bereits bei Schritt d) und vor Schritt e) komprimiert ist.

Bei dem erfindungsgemäßen Verfahren handelt es sich um ein Verfahren zur Herstellung von Formteilen aus Faserverbund-Werkstoff. Das Verfahren umfasst zunächst den Schritt des Bereitstellens einer so genannten "Membranpresse". Die Presse umfasst ein erstes - beispielsweise oberes - Presswerkzeug, ein zweites - beispielsweise unteres - Presswerkzeug und eine Membran. Die Membran kann beispielsweise durch ein dünnes Metallblech gebildet sein. Das erste Presswerkzeug und das zweite Presswerkzeug sind relativ zueinander bewegbar, so dass die Presse geöffnet und geschlossen werden kann. Die Membran ist mit einem der beiden Presswerkzeuge verbunden, wobei sich zwischen der Membran und dem mit ihr verbundenen Presswerkzeug eine Kavität für ein Arbeitsmedium ausbildet. Die Kavität ist dazu bestimmt, ein Arbeitsmedium - beispielsweise ein Gas oder eine Flüssigkeit - in sich aufzunehmen. Die Membran und das mit ihr verbundene Presswerkzeug sind daher in einer gas- und/oder flüssigkeitsdichten Weise miteinander verbunden. Das Volumen des Arbeitsraumes ist bei geschlossener Presse durch eine Bewegung der Membran veränderbar, also vergrößerbar oder verkleinerbar.

Das erfindungsgemäße Verfahren umfasst zudem den Schritt des Bereitstellens von wenigstens einem Werkstück mit einem Werkstückvolumen, wobei das Werkstück eine Matrix und darin eingelegte Fasern aufweist. Bei den in der Matrix eingelegten Fasern kann es sich beispielsweise um Kohlenstofffasern ("Carbonfasern"), Glasfasern, Aramidfasern oder dergleichen handeln. Die Fasern können beispielsweise als Halbzeuge in Form von Matten, Vliesen, Gelegen, Geweben, Geflechten oder Gestricken verwendet werden. Die Matrix bzw. das Harz kann beispielsweise aus thermoplastischem Kunststoff gebildet sein. Bei dem Werkstück kann es sich um bereits fertige "Faser-Matrix-Halbzeuge" handeln, die auch als "Prepreg" bezeichnet werden.

Die weiteren Schritte des erfindungsgemäßen Verfahrens sind das Einlegen des Werkstücks in den Arbeitsraum der Presse, das Schließen der Presse, wobei der Arbeitsraum ein erstes Volumen einnimmt, das Beaufschlagen des Werkstücks mit Druck und/oder mit Temperatur mittels der Membran, wobei der Arbeitsraum ein zweites Volumen einnimmt, und wobei aus dem Werkstück ein ausgehärtetes Formteil entsteht, und das Öffnen der Presse und das Entnehmen des Formteils. Das "erste Volumen" des Arbeitsraumes bezeichnet also das Volumen des Arbeitsraumes, bevor die Membran auf das Werkstück einwirkt während das "zweite Volumen" des Arbeitsraumes das Volumen des Arbeitsraumes während der Einwirkung der Membran auf das Werkstück bezeichnet. Da die Membran das Werkstück mit Druck beaufschlagt und dabei den Arbeitsraum verkleinert und somit das darin befindliche Werkstück komprimiert, ist das "erste Volumen" des Arbeitsraumes regelmäßig größer als das "zweite Volumen" des Arbeitsraumes.

Erfindungsgemäß ist vorgesehen, dass das erste Volumen des Arbeitsraumes geringer ist als das Werkstückvolumen, so dass das Werkstück bereits bei Schritt d) und vor Schritt e) komprimiert ist. Das Werkstückvolumen bezeichnet das Volumen des Werkstücks, bevor dieses in den Arbeitsraum eingelegt wird, also das Volumen des Werkstücks im unkomprimierten Zustand. Der Zustand des Werkstücks ist also bereits komprimiert, wenn beispielsweise zwischen einzelnen Werkstofflagen befindliche Luft herausgedrückt ist.

Mit anderen Worten werden die Größe des Werkstücks und die Größe des Arbeitsraumes derart aufeinander abgestimmt, dass das Werkstück etwas zu groß für den Arbeitsraum ist bzw. dass der Arbeitsraum etwas zu klein für das Werkstück ist. Das Werkstück muss also in den Arbeitsraum "gequetscht" werden. Dies hat zur Folge, dass das Werkstück bereits beim Einlegen in den Arbeitsraum geringfügig komprimiert werden muss und somit bereits beim Einlegen in den Arbeitsraum mit einer (kontakterzeugten) Vorspannung beaufschlagt wird. Dieser Vorgehensweise liegt die Idee zugrunde, dass während der gesamten Bearbeitung in der Presse stets ein Mindestdruck auf das Werkstück einwirken soll, und zwar unabhängig vom Druckund Temperaturverlauf. Die Sicherstellung eines Mindestdruckes hat erheblichen Einfluss auf die Bauteilqualität, da beispielsweise Lufteinschlüsse im Bauteil durch die Einhaltung eines Mindestdruckes verhindert werden können. Bei herkömmlicher Verfahrensführung (ohne "Vorspannung") besteht beispielsweise die Gefahr, dass infolge unterschiedlicher Wärmeausdehnungskoeffizienten bei sinkender Temperatur die Presswerkzeuge schneller "schrumpfen" als das dazwischen befindliche Werkstück, wodurch der auf das Werkstück wirkende Druck bis auf Null abfallen kann. Dies wird durch die erfindungsgemäße Vorgehensweise sicher verhindert.

Nach einer Ausgestaltung des Verfahrens ist vorgesehen, dass das zweite Volumen des Arbeitsraumes geringer ist als das Werkstückvolumen, so dass das Werkstück auch während Schritt e) komprimiert ist.

Wie bereits zuvor definiert, bezeichnet das "zweite Volumen" des Arbeitsraumes das Volumen des Arbeitsraumes während der Einwirkung der Membran auf das Werkstück. Indem auch das zweite Volumen des Arbeitsraumes geringer ist als das Werkstückvolumen, wird sichergestellt, dass die Vorspannung des Werkstücks erhalten bleibt oder - was bevorzugt ist - sogar erhöht wird. Dies soll während Schritt e) erfolgen, also während das Werkstück durch die Membran mit Druck und/oder Temperatur beaufschlagt wird.

Gemäß einer weiteren Ausgestaltung des Verfahrens ist vorgesehen, dass in Schritt b) auch wenigstens ein Kern mit einem Kernvolumen bereitgestellt wird, dass in Schritt c) auch der Kern in den Arbeitsraum der Presse eingelegt wird, und dass das erste Volumen des Arbeitsraumes geringer ist als die Summe aus dem Werkstückvolumen und dem Kernvolumen, so dass das Werkstück bereits bei Schritt d) und vor Schritt e) komprimiert ist.

Bei komplizierten Bauteilgeometrien, beispielsweise bei Bauteilen mit Hinterschneidungen, ist häufig der Einsatz von separaten Kernen notwendig, da andernfalls das Bauteil nicht aus der Form genommen werden kann. Durch den Einsatz von separat einlegbaren und separat entnehmbaren Kernen können daher auch komplexe Bauteilgeometrien hergestellt werden. Wenn ein Kern oder mehrere Kerne verwendet werden, kann das zuvor beschriebene Prinzip einer Vorspannung erreicht werden, indem das erste Volumen des Arbeitsraumes geringer ist als die Summe aus dem Werkstückvolumen und dem Kernvolumen. Auf dieser Weise kann sichergestellt werden, dass das Werkstück mit einer Vorspannung beaufschlagt wird, obgleich das Werkstück allein betrachtet (also ohne die Kerne) ein geringeres Volumen aufweisen kann als der Arbeitsraum. Denn das zusätzliche Volumen der Kerne sorgt für eine Kompression des Werkstücks, wenn sichergestellt ist, dass jedenfalls die Summe aus dem Werkstückvolumen und dem Kernvolumen größer sind als das erste Volumen des Arbeitsraumes. Auf diese Weise kann die zuvor beschriebene Lösung auch bei dem Einsatz von einem oder mehreren Kernen genutzt werden.

Zu dieser Ausgestaltung wird weiter vorgeschlagen, dass das zweite Volumen des Arbeitsraumes geringer ist als die Summe aus dem Werkstückvolumen und dem Kernvolumen, so dass das Werkstück auch während Schritt e) komprimiert ist. Wie bereits zuvor definiert, bezeichnet das "zweite Volumen" des Arbeitsraumes das Volumen des Arbeitsraumes während der Einwirkung der Membran auf das Werkstück. Indem auch das zweite Volumen des Arbeitsraumes geringer ist als die Summe aus dem Werkstückvolumen und dem Kernvolumen, wird sichergestellt, dass die Vorspannung des Werkstücks erhalten bleibt oder - was bevorzugt ist - sogar erhöht wird. Dies soll während Schritt e) erfolgen, also während das Werkstück und die Kerne durch die Membran mit Druck und/oder Temperatur beaufschlagt werden.

Nach einer weiteren Ausgestaltung des Verfahrens ist vorgesehen, dass die Membran aus Metall hergestellt ist und vorzugsweise eine Dicke im Bereich zwischen 0,05 mm und 0,5 mm, insbesondere zwischen 0,15 mm und 0,3 mm aufweist.

Eine Membran aus Metall, insbesondere aus einem Stahlblech, hat den Vorteil, dass die Membran aufgrund der mechanischen Eigenschaften von Metall einerseits hohe Drücke übertragen kann und andererseits aufgrund der hohen thermischen Leitfähigkeit von Metall gut dazu geeignet ist, das Werkstück zu heizen oder zu kühlen. Die Übertragung von Drücken wird dadurch erreicht, dass neben der Membran eine Kavität vorgesehen ist, die von einem möglichst inkompressiblen Arbeitsmedium - beispielsweise Öl - befüllt werden kann, wodurch sich die Membran verformt und in Richtung des Werkstücks gedrückt wird. Eine Erwärmung oder Abkühlung des Werkstücks kann erreicht werden, wenn das in der Kavität befindliche Arbeitsmedium erwärmt oder gekühlt wird. Vorzugsweise weist die Membran eine sehr glatte Oberfläche auf, insbesondere eine Oberfläche mit einem Rz-Wert von 4,0 µm oder weniger, vorzugsweise von 2,7 µm oder weniger, ganz vorzugsweise sogar unterhalb von 1,0 µm, beispielsweise 0.1 µm.

Gemäß einer weiteren Ausgestaltung des Verfahrens ist vorgesehen, dass während Schritt e) der Druck und/oder die Temperatur des Arbeitsmediums in der Kavität verändert werden.

Indem der Druck und/oder die Temperatur des Arbeitsmediums in der Kavität veränderbar ist, sind auch der Druck, der auf das Werkstück einwirkt sowie die Temperatur, die auf das Werkstück einwirkt, veränderbar, da sowohl der Druck als auch die Temperatur des Arbeitsmediums über die Membran auf das Werkstück übertragen werden. Da sowohl der Druck als auch die Temperatur verändert werden können, ist es möglich, anstelle eines konstanten Drucks und einer konstanten Temperatur auch sich verändernde Druck- und Temperaturverläufe vorzusehen, beispielsweise zunächst ein Anstieg von Druck und Temperatur, danach ein Konstanthalten von Druck und Temperatur und abschließend ein Absenken von Druck und Temperatur. Ermöglicht wird eine Veränderung des Druckes des Arbeitsmediums beispielsweise durch eine Veränderung Menge des in der Kavität befindlichen Arbeitsmediums durch Zufluss oder Abfluss von Arbeitsmedium. Eine Veränderung der Temperatur des Arbeitsmediums kann hingegen beispielsweise dadurch erreicht werden, dass das Arbeitsmedium zirkuliert und das Zufließende Arbeitsmedium eine höhere oder niedrigere Temperatur als das in der Kavität befindliche Arbeitsmedium aufweist und dieses somit erwärmt oder kühlt.

Nach einer weiteren Ausgestaltung des Verfahrens ist vorgesehen, dass in Schritt e) der Druck des in der Kavität befindlichen Arbeitsmediums bis auf einen Maximaldruck im Bereich zwischen 5 bar und 50 bar, insbesondere zwischen 10 bar und 30 bar angehoben wird.

Alternativ oder zusätzlich hierzu kann gemäß einer weiteren Ausgestaltung des Verfahrens vorgesehen sein, dass in Schritt e) die Temperatur des in der Kavität befindlichen Arbeitsmediums auf eine Maximaltemperatur im Bereich zwischen 300°C und 500°C, insbesondere zwischen 330°C und 410°C angehoben wird.
Die zuvor genannten Maximaldrücke und die zuvor genannten Maximaltemperaturen haben bei der Herstellung von Formteilen aus Faserverbund-Werkstoff zu optimalen Ergebnissen geführt. Bei den angegebenen Werten handelt es sich um Maximalwerte; während der Herstellung in der Presse werden auch niedrigere Druck- und Temperaturwerte erreicht, beispielsweise während der Aufwärmphase und während der Abkühlphase.

Nach einer weiteren Ausgestaltung des Verfahrens ist schließlich vorgesehen, dass in Schritt b) mehrere separate Werkstücke bereitgestellt werden, die in Schritt c) in den Arbeitsraum der Presse eingelegt werden und in Schritt e) miteinander verbunden werden, wobei aus den Werkstücken ein zusammenhängendes, ausgehärtetes Formteil entsteht.

Dieser Verfahrensweise liegt die Idee zugrunde, die Druck- und Temperatureinwirkung in der Presse nicht nur dafür zu nutzen, ein einzelnes Bauteil auszuhärten, sondern auch dafür zu nutzen, mehrere Bauteile miteinander zu verbinden. Bei den Bauteilen kann es sich beispielsweise um Prepregs handeln, die erstmals aushärten. Bei den Bauteilen kann es sich aber auch um bereits zuvor ausgehärtete Bauteile (z.B. Verstärkungselemente) aus Faserverbund-Werkstoff handeln, die infolge der Temperatureinwirkung wieder zähflüssig werden, um mit weiteren Bauteilen zu einem gemeinsamen, zusammenhängenden Formteil verbunden zu werden.

Die Erfindung wird nachfolgend anhand einer lediglich ein bevorzugtes Ausführungsbeispiel darstellenden Zeichnung näher erläutert. In der Zeichnung zeigen:
- Fig. 1A:: eine erste Ausgestaltung einer Presse zur Durchführung eines erfindungsgemäßen Verfahrens im Querschnitt in geöffneter Stellung ohne eingelegtes Werkstück,
- Fig. 1B:: die Presse aus Fig. 1A in geöffneter Stellung mit eingelegtem Werkstück,
- Fig. 1C:: die Presse aus Fig. 1A in geschlossener Stellung,
- Fig. 2A:: eine zweite Ausgestaltung einer Presse zur Durchführung eines erfindungsgemäßen Verfahrens im Querschnitt in geöffneter Stellung ohne eingelegte Werkstücke und ohne eingelegte Kerne,
- Fig. 2B:: die Presse aus Fig. 2A in geöffneter Stellung mit eingelegten Werkstücken und eingelegten Kernen,
- Fig. 2C:: die Presse aus Fig. 2A in geschlossener Stellung, und
- Fig. 3:: den Ablauf eines erfindungsgemäßen Verfahrens in schematischer Darstellung.

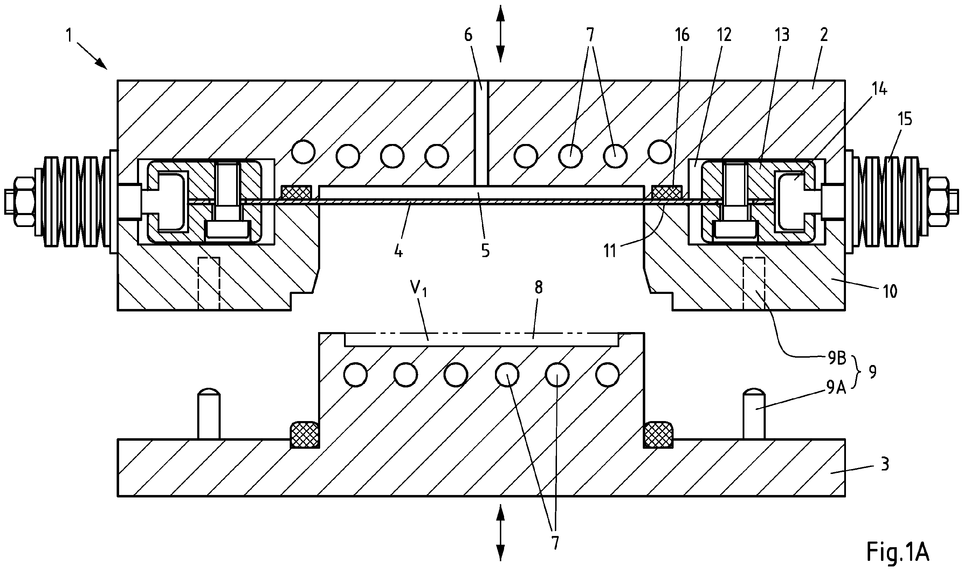

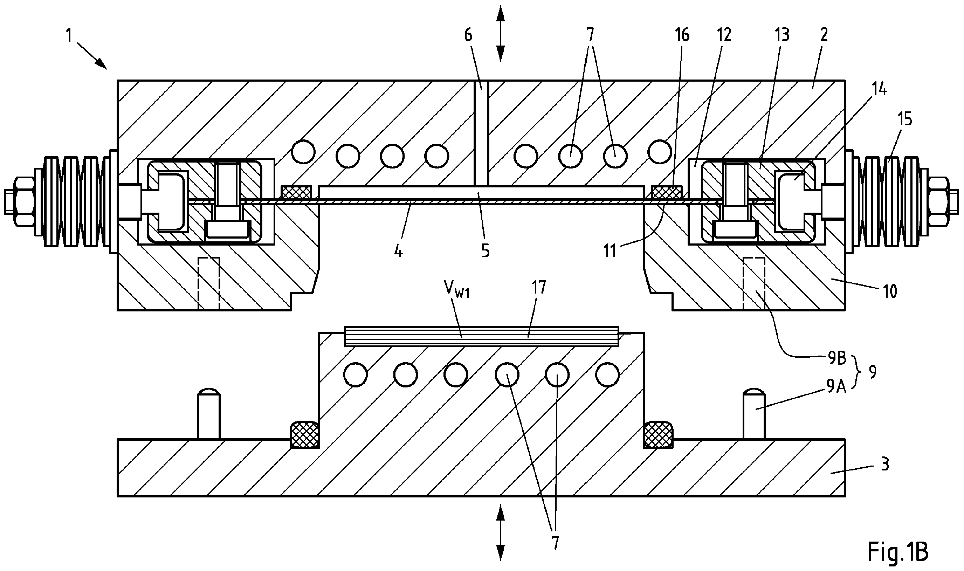

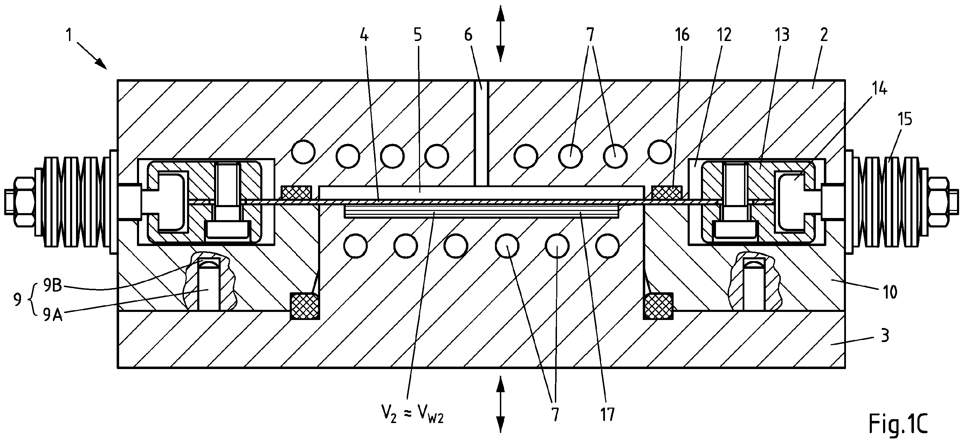

Fig. 1A zeigt eine erste Ausgestaltung einer Presse 1 zur Durchführung eines erfindungsgemäßen Verfahrens im Querschnitt in geöffneter Stellung ohne eingelegtes Werkstück. Die Presse 1 umfasst ein erstes - oberes - Presswerkzeug 2 sowie ein zweites - unteres - Presswerkzeug 3. Die beiden Presswerkzeuge 2, 3 sind relativ zueinander bewegbar, beispielsweise in vertikaler Richtung (in Fig. 1 angedeutet durch Pfeile). Zudem umfasst die Presse eine Membran 4, die mit dem oberen Presswerkzeug 2 verbunden ist. Alternativ zu der in Fig. 1 gezeigten Ausgestaltung könnte die Membran 4 auch mit dem unteren Presswerkzeug 3 verbunden sein. Zwischen der Membran 4 und dem mit ihr verbundenen oberen Presswerkzeug 2 bildet sich eine Kavität 5 für ein Arbeitsmedium, beispielsweise Öl. Die Membran 4 ist aus Metall hergestellt und weist vorzugsweise eine Dicke im Bereich zwischen 0,05 mm und 0,5 mm auf. Die Kavität 5 kann über einen Kanal 6 mit dem Arbeitsmedium befüllt werden. Sowohl in dem oberen Presswerkzeug 2 als auch in dem unteren Presswerkzeug 3 sind Bohrungen 7 vorgesehen, durch die ein Heizund/oder Kühlmedium geleitet werden kann.

Bei der in Fig. 1A gezeigten Ausgestaltung der Presse 1 ist in dem unteren Presswerkzeug 3 ein Arbeitsraum 8 vorgesehen, in den ein (in Fig. 1A nicht gezeigtes) Werkstück eingelegt werden kann. Der Arbeitsraum 8 weist bei geöffneter Presse ein erstes Volumen V₁ auf. Die beiden Presswerkzeuge 2, 3 weisen eine Führung 9 auf, die beispielsweise durch einen Vorsprung 9A und eine Ausnehmung 9B gebildet sein kann, wobei der Vorsprung 9A an dem unteren Presswerkzeug 3 vorgesehen sein kann und wobei die Ausnehmung 9B an dem oberen Presswerkzeug 2 vorgesehen sein kann.

Die Membran 4 ist mit dem oberen Presswerkzeug 2 auf die folgende Weise verbunden: Das obere Presswerkzeug 2 weist ein umlaufendes Randelement 10 auf, das mit dem oberen Presswerkzeug 2 verschraubt ist (die Verschraubung ist in Fig. 1A nicht dargestellt). Zwischen dem oberen Presswerkzeug 2 und seinem Randelement 10 bildet sich ein Spalt 11, durch den die Membran 4 hindurch geführt wird. Der Spalt 11 mündet in einen Hohlraum 12, in dem eine Klemmeinrichtung 13 vorgesehen ist, in die die Membran 4 eingeklemmt ist. Die Klemmeinrichtung 13 ist mit einem Zuganker 14 verbunden, der durch eine Öffnung aus dem oberen Presswerkzeug 2 und dem Randelement 10 herausgeführt wird und dort durch eine sich an der Außenfläche abstützende Feder 15 nach außen gedrückt wird, wodurch die Membran 4 mit einer Vorspannung versehen wird. Zur Abdichtung der Kavität 5 ist in dem Spalt 11 eine Dichtung 16 vorgesehen, die eine Bewegung der Membran 4 erlaubt.

Fig. 1B zeigt die Presse 1 aus Fig. 1A in geöffneter Stellung mit eingelegtem Werkstück 17. Diejenigen Bereiche der Presse 1, die bereits zuvor beschrieben worden sind, sind in Fig. 1B mit entsprechenden Bezugszeichen versehen. Der Unterschied zu der in Fig. 1A gezeigten Stellung liegt darin, dass das Werkstück 17 in den Arbeitsraum 8 des unteren Presswerkzeugs 3 eingelegt worden ist. Das Werkstück 17 weist ein Werkstückvolumen V_{W1} auf, das etwas größer ist als das erste Volumen V₁ des Arbeitsraumes 8. Dies führt dazu, dass das Werkstück 17 geringfügig komprimiert werden muss, um in den Arbeitsraum 8 eingelegt werden zu können, wodurch das Werkstück 17 einer Vorspannung ausgesetzt wird.

Fig. 1C zeigt die Presse 1 aus Fig. 1A in geschlossener Stellung. Diejenigen Bereiche der Presse 1, die bereits zuvor beschrieben worden sind, sind auch in Fig. 1C mit entsprechenden Bezugszeichen versehen. Die Presse 1 wurde geschlossen, indem die beiden Presswerkzeuge 2, 3 aufeinander zu bewegt worden sind. In der in Fig. 1C gezeigten Stellung wird das Werkstück 17 mit Druck und Temperatur beaufschlagt. Die Beaufschlagung mit Druck erfolgt, indem ein Arbeitsmedium, beispielsweise Öl, durch den Kanal 6 in die Kavität 5 geleitet wird, wodurch die Membran 4 in Richtung des Werkstücks 17 gepresst wird. Die Beaufschlagung mit Temperatur kann auf unterschiedliche Weise erfolgen: Eine Möglichkeit besteht darin, das durch den Kanal 6 in die Kavität 5 geleitete Arbeitsmedium zu erhitzen, so dass die Wärme von dem in der Kavität 5 befindlichen Arbeitsmedium durch die Membran 4 auf das Werkstück 17 übertragen wird. Umgekehrt könnte das Arbeitsmedium gekühlt werden, um das Werkstück 17 zu kühlen. Alternativ oder zusätzlich hierzu kann vorgesehen sein, dass die Bohrungen 7 von einem Heiz- und/oder Kühlmedium durchströmt werden, wodurch zunächst die beiden Presswerkzeuge 2, 3 und anschließend auch das Werkstück 17 aufgeheizt oder abgekühlt werden können. Infolge der Druckeinwirkung ist der Arbeitsraum 8 in der in Fig. 1C gezeigten Stellung weiter verkleinert und weist ein zweites Volumen V₂ auf. Dies hat eine weitere Kompression des Werkstücks 17 zur Folge, das in der in Fig. 1C gezeigten Stellung ein zweites Werkstückvolumen V_{W2} aufweist, das etwa dem zweiten Volumen V₂ des Arbeitsraumes 8 entspricht.

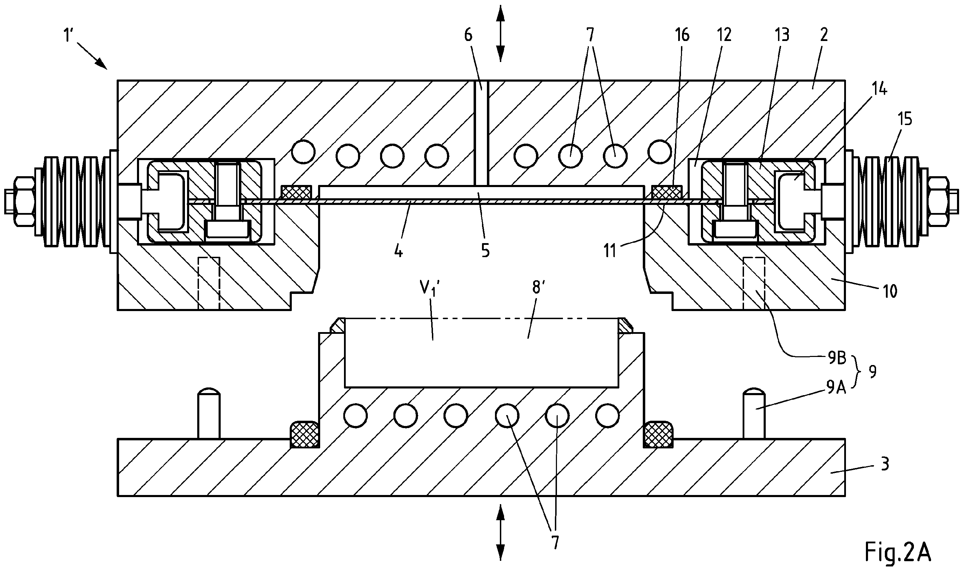

Fig. 2A zeigt eine zweite Ausgestaltung einer Presse 1' zur Durchführung eines erfindungsgemäßen Verfahrens im Querschnitt in geöffneter Stellung ohne eingelegte Werkstücke 17 und ohne eingelegte Kerne. Diejenigen Bereiche der Presse 1', die bereits zuvor beschrieben worden sind, sind auch in Fig. 2A mit entsprechenden Bezugszeichen versehen. Die in Fig. 2A gezeigte zweite Ausgestaltung der Presse 1' unterscheidet sich von der zuvor gezeigten ersten Ausgestaltung der Presse 1' insbesondere durch einen vergrößerten Arbeitsraum 8', der die Verwendung von (in Fig. 2A nicht dargestellten) Kernen ermöglicht. Der vergrößerte Arbeitsraum 8' weist bei geöffneter Presse ein erstes Volumen V₁' auf.

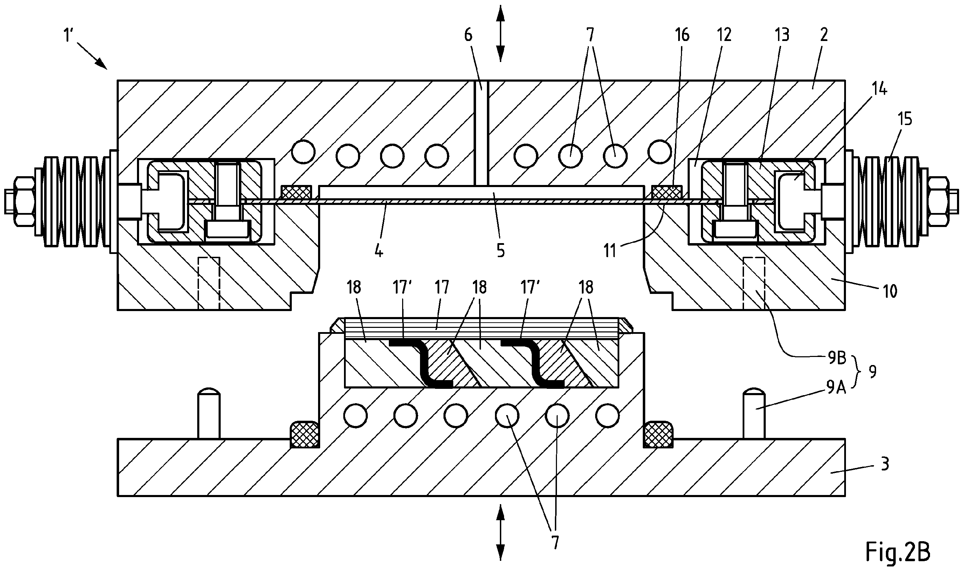

Fig. 2B zeigt die Presse 1' aus Fig. 2A in geöffneter Stellung mit eingelegten Werkstücken 17 und eingelegten Kernen 18. Diejenigen Bereiche der Presse 1', die bereits zuvor beschrieben worden sind, sind auch in Fig. 2B mit entsprechenden Bezugszeichen versehen. Neben dem bereits in Fig. 1A bis Fig. 1C beschriebenen Werkstück 17 sind nun zwei weitere Werkstücke 17' in den Arbeitsraum 8' der Presse 1' eingelegt, wobei es sich bei den Werkstücken 17' beispielsweise um bereits vorgefertigte Verstärkungselemente mit Z-förmigem Querschnitt handeln kann (z.B. "Stringer" eines Flugzeugrumpfes). Die Werkstücke 17' sollen bei dem nachfolgenden Fertigungsschritt mit dem Werkstück 17 verbunden werden. Um trotz der komplexen Geometrie der Werkstücke 17' eine gleichmäßige Druckverteilung zu ermöglichen, werden mehrere Kerne 18 in den Arbeitsraum eingelegt, deren Form an die Form des Arbeitsraumes 8' sowie an die Form der Werkstücke 17, 17' angepasst ist. Die Werkstücke 17, 17' weisen zusammen ein erstes Werkstückvolumen V_{W1}' auf und die Kerne 18 weisen zusammen ein erstes Kernvolumen V_{K1}' auf. Die Summe aus dem ersten Werkstückvolumen V_{W1}' und dem ersten Kernvolumen V_{K1}' (V_{W1}' + V_{K1}') ist etwas größer ist als das erste Volumen V₁' des Arbeitsraumes 8'. Dies führt dazu, dass die Werkstücke 17, 17' und die Kerne 18 geringfügig komprimiert werden müssen, um in den Arbeitsraum 8' eingelegt werden zu können, wodurch die Werkstücke 17, 17' und die Kerne 18 einer Vorspannung ausgesetzt werden.

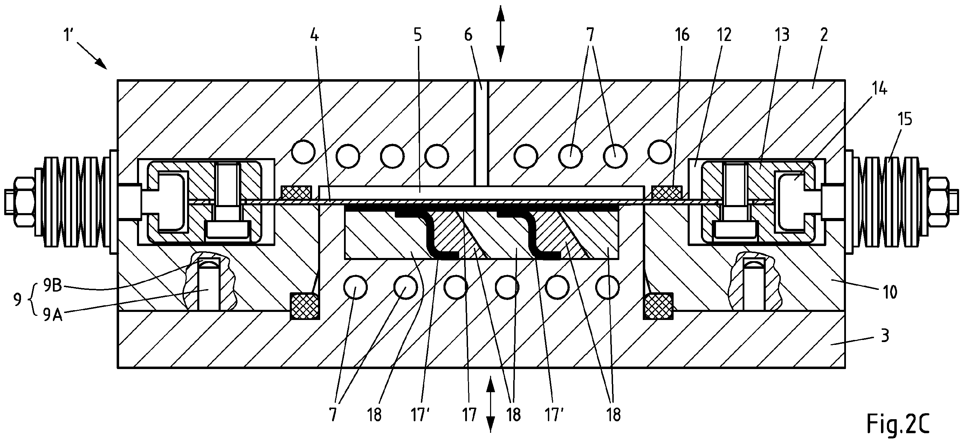

Fig. 2C zeigt die Presse 1' aus Fig. 2A in geschlossener Stellung. Diejenigen Bereiche der Presse 1', die bereits zuvor beschrieben worden sind, sind auch in Fig. 2C mit entsprechenden Bezugszeichen versehen. Die Presse 1' wurde geschlossen, indem die beiden Presswerkzeuge 2, 3 aufeinander zu bewegt worden sind. In der in Fig. 2C gezeigten Stellung werden die Werkstücke 17, 17' mit Druck und Temperatur beaufschlagt. Die Beaufschlagung mit Druck erfolgt, indem ein Arbeitsmedium, beispielsweise Öl, durch den Kanal 6 in die Kavität 5 geleitet wird, wodurch die Membran 4 in Richtung der Werkstücke 17, 17' gepresst wird. Die Beaufschlagung mit Temperatur kann auf unterschiedliche Weise erfolgen: Eine Möglichkeit besteht darin, das durch den Kanal 6 in die Kavität 5 geleitete Arbeitsmedium zu erhitzen, so dass die Wärme von dem in der Kavität 5 befindlichen Arbeitsmedium durch die Membran 4 auf die Werkstücke 17, 17' übertragen wird. Umgekehrt könnte das Arbeitsmedium gekühlt werden, um die Werkstücke 17, 17' zu kühlen. Alternativ oder zusätzlich hierzu kann vorgesehen sein, dass die Bohrungen 7 von einem Heiz- und/oder Kühlmedium durchströmt werden, wodurch zunächst die beiden Presswerkzeuge 2, 3 und anschließend auch die Werkstücke 17, 17' aufgeheizt oder abgekühlt werden können. Infolge der Druckeinwirkung ist der Arbeitsraum 8' in der in Fig. 2C gezeigten Stellung weiter verkleinert und weist ein zweites Volumen V₂' auf. Dies hat eine weitere Kompression der Werkstücke 17, 17' und auch der Kerne 18 zur Folge. In der in Fig. 2C gezeigten Stellung weisen die Werkstücke 17, 17' zusammen ein zweites Werkstückvolumen Vwz` auf und die Kerne 18 weisen zusammen ein zweites Kernvolumen V_{K2}' auf. Die Summe aus dem zweiten Werkstückvolumen Vwz' und dem zweiten Kernvolumen V_{K2}' (V_{W2}' + V_{K2}') entspricht etwa dem zweiten Volumen V₂' des Arbeitsraumes 8'.

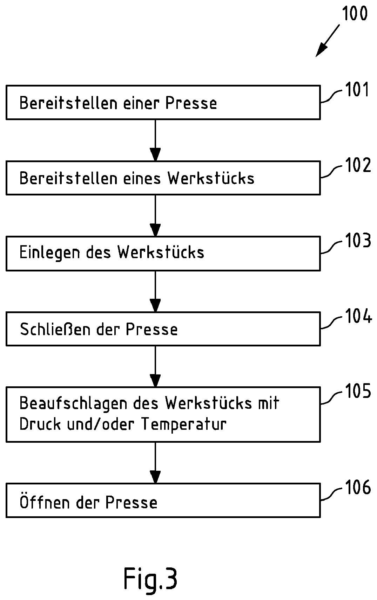

Fig. 3 zeigt schließlich den Ablauf eines erfindungsgemäßen Verfahrens 100 in schematischer Darstellung. Das Verfahren 100 umfasst die folgenden Schritte: 101: Bereitstellen einer Presse, 102: Bereitstellen eines Werkstücks, 103: Einlegen des Werkstücks, 104: Schließen der Presse, 105: Beaufschlagen des Werkstücks mit Druck und/oder mit Temperatur, 106: Öffnen der Presse.

### Bezugszeichenliste:

- 1, 1':: Presse
- 2:: erstes (oberes) Presswerkzeug
- 3:: zweites (unteres) Presswerkzeug
- 4:: Membran
- 5:: Kavität
- 6:: Kanal
- 7:: Bohrung
- 8,8':: Arbeitsraum
- 9:: Führung
- 9A:: Vorsprung
- 9B:: Ausnehmung
- 10:: Randelement
- 11:: Spalt
- 12:: Hohlraum
- 13:: Klemmeinrichtung
- 14:: Zuganker
- 15:: Feder
- 16:: Dichtung
- 17,17':: Werkstück
- 18:: Kern
- V₁, V₁':: erstes Volumen (des Arbeitsraumes 8, 8')
- V₂, V₂':: zweites Volumen (des Arbeitsraumes 8, 8')
- Vwi, Vwi':: erstes Werkstückvolumen (der Werkstücke 17, 17')
- V_{W2}, Vwz`:: zweites Werkstückvolumen (der Werkstücke 17, 17')
- V_{K1}:: erstes Kernvolumen (der Kerne 18)
- V_{K2}:: zweites Kernvolumen (der Kerne 18)

## Patentansprüche

1. Verfahren zur Herstellung von Formteilen aus Faserverbund-Werkstoff, umfassend die folgenden Schritte:
a) Bereitstellen einer Presse (1, 1') mit
- einem ersten Presswerkzeug (2),
- einem zweiten Presswerkzeug (3), und
- einer Membran (4),
- wobei das erste Presswerkzeug (2) und das zweite Presswerkzeug (3) relativ zueinander bewegbar sind,
- wobei die Membran (4) mit einem der Presswerkzeuge (2) verbunden ist,
- wobei sich zwischen der Membran (4) und dem mit ihr verbundenen Presswerkzeug (2) eine Kavität (5) für ein Arbeitsmedium ausbildet,
- wobei sich in dem anderen Presswerkzeug (3) ein Arbeitsraum (8, 8') für ein Werkstück ausbildet, und
- wobei das Volumen des Arbeitsraumes (8, 8') bei geschlossener Presse (1, 1') durch eine Bewegung der Membran (4) veränderbar ist,
b) Bereitstellen von wenigstens einem Werkstück (17, 17') mit einem Werkstückvolumen (V_{W1}, V_{W1}'), wobei das Werkstück (17, 17') eine Matrix und darin eingelegte Fasern aufweist,
c) Einlegen des Werkstücks (17, 17') in den Arbeitsraum (8, 8') der Presse (1, 1'),
d) Schließen der Presse (1, 1'), wobei der Arbeitsraum (8, 8') ein erstes Volumen (V₁, V₁') einnimmt,
e) Beaufschlagen des Werkstücks (17, 17') mit Druck und/oder mit Temperatur mittels der Membran (4), wobei der Arbeitsraum (8, 8') ein zweites Volumen (V₂, V₂') einnimmt, und wobei aus dem Werkstück (17, 17') ein ausgehärtetes Formteil entsteht, und
f) Öffnen der Presse (1, 1') und entnehmen des Formteils,
**dadurch gekennzeichnet, dass**
das erste Volumen (V₁, V₁') des Arbeitsraumes (8, 8') geringer ist als das Werkstückvolumen (V_{W1}, V_{W1}'), so dass das Werkstück (17, 17') bereits bei Schritt d) und vor Schritt e) komprimiert ist.

2. Verfahren nach Anspruch 1,
**dadurch gekennzeichnet, dass**
das zweite Volumen (V₂, V₂') des Arbeitsraumes (8, 8') geringer ist als das Werkstückvolumen (V_{W1}, V_{W1}'), so dass das Werkstück (17, 17') auch während Schritt e) komprimiert ist.

3. Verfahren nach Anspruch 1,
**dadurch gekennzeichnet, dass**
in Schritt b) auch wenigstens ein Kern (18) mit einem Kernvolumen (V_{K1}) bereitgestellt wird, dass in Schritt c) auch der Kern (18) in den Arbeitsraum (8') der Presse eingelegt wird, und dass das erste Volumen (V₁') des Arbeitsraumes (8`) geringer ist als die Summe aus dem Werkstückvolumen (V_{W1}') und dem Kernvolumen (V_{K1}), so dass das Werkstück (17, 17') bereits bei Schritt d) und vor Schritt e) komprimiert ist.

4. Verfahren nach Anspruch 3,
**dadurch gekennzeichnet, dass**
das zweite Volumen (V₂') des Arbeitsraumes (8') geringer ist als die Summe aus dem Werkstückvolumen (V_{W1}') und dem Kernvolumen (V_{K1}), so dass das Werkstück (17, 17') auch während Schritt e) komprimiert ist.

5. Verfahren nach einem der Ansprüche 1 bis 4,
**dadurch gekennzeichnet, dass**
die Membran (4) aus Metall hergestellt ist und vorzugsweise eine Dicke im Bereich zwischen 0,05 mm und 0,5 mm, insbesondere zwischen 0,25 mm und 0,4 mm aufweist.

6. Verfahren nach einem der Ansprüche 1 bis 5,
**dadurch gekennzeichnet, dass**
während Schritt e) der Druck und/oder die Temperatur des Arbeitsmediums in der Kavität (5) verändert werden.

7. Verfahren nach einem der Ansprüche 1 bis 6,
**dadurch gekennzeichnet, dass**
in Schritt e) der Druck des in der Kavität (5) befindlichen Arbeitsmediums bis auf einen Maximaldruck im Bereich zwischen 10 bar und 50 bar, insbesondere zwischen 15 bar und 30 bar angehoben wird.

8. Verfahren nach einem der Ansprüche 1 bis 7,
**dadurch gekennzeichnet, dass**
in Schritt e) die Temperatur des in der Kavität (5) befindlichen Arbeitsmediums auf eine Maximaltemperatur im Bereich zwischen 300°C und 500°C, insbesondere zwischen 330°C und 410°C angehoben wird.

9. Verfahren nach einem der Ansprüche 1 bis 8,
**dadurch gekennzeichnet, dass**
in Schritt b) mehrere separate Werkstücke (17, 17') bereitgestellt werden, die in Schritt c) in den Arbeitsraum (8') der Presse (1') eingelegt werden und in Schritt e) miteinander verbunden werden, wobei aus den Werkstücken (17, 17') ein zusammenhängendes, ausgehärtetes Formteil entsteht.

## Claims

1. Method for manufacturing moulded parts from fibre composite material, comprising the following steps:
a) providing a press (1, 1') with
- a first pressing tool (2),
- a second pressing tool (3), and
- a membrane (4),
- wherein the first pressing tool (2) and the second pressing tool (3) can be moved relative to one another,
- wherein the membrane (4) is connected to one of the pressing tools (2),
- wherein a cavity (5) for a working medium is formed between the membrane (4) and the pressing tool (2) connected thereto,
- wherein a working space (8, 8') for a workpiece is formed in the other pressing tool (3), and
- wherein, when the press (1, 1') is closed, the volume of the working space (8, 8') can be changed by moving the membrane (4),
b) providing at least one workpiece (17, 17') with a workpiece volume (V_{W1}, V_{W1}'), wherein the workpiece (17, 17') has a matrix and fibres inserted therein,
c) inserting the workpiece (17, 17') into the working space (8, 8') of the press (1, 1'),
d) closing the press (1, 1'), wherein the working space (8, 8') occupies a first volume (V₁, V₁'),
e) applying pressure and/or temperature to the workpiece (17, 17') by means of the membrane (4), wherein the working space (8, 8') occupies a second volume (V₂, Vz`) and wherein a hardened moulded part is formed from the workpiece (17, 17'), and
f) opening the press (1, 1') and removing the moulded part, **characterised in that** the first volume (V₁, V₁') of the working space (8, 8') is smaller than the workpiece volume (V_{w1}, V_{w1}') such that the workpiece (17, 17') is already compressed in step d) and before step e).

2. Method according to claim 1, **characterised in that** the second volume (V₂, V₂') of the working space (8, 8') is smaller than the workpiece volume (V_{w1}, V_{w1}') such that the workpiece (17, 17') is also compressed during step e).

3. Method according to claim 1, **characterised in that** in step b), at least one core (18) with a core volume (Vₖ₁) is also provided, **in that** in step c), the core (18) is also inserted into the working space (8') of the press and **in that** the first volume (V₁') of the working space (8') is smaller than the sum of the workpiece volume (V_{w1}') and the core volume (Vₖ₁) such that the workpiece (17, 17') is already compressed in step d) and before step e).

4. Method according to claim 3, **characterised in that** the second volume (V₂') of the working space (8') is smaller than the sum of the workpiece volume (V_{W1}') and the core volume (Vₖ₁) such that the workpiece (17, 17') is also compressed during step e).

5. Method according to any one of claims 1 to 4, **characterised in that** the membrane (4) is manufactured from metal and preferably has a thickness in the range between 0.05 mm and 0.5 mm, in particular between 0.25 mm and 0.4 mm.

6. Method according to any one of claims 1 to 5, **characterised in that** during step e), the pressure and/or the temperature of the working medium in the cavity (5) are changed.

7. Method according to any one of claims 1 to 6, **characterised in that** in step e), the pressure of the working medium located in the cavity (5) is increased to a maximum pressure in the range between 10 bar and 50 bar, in particular between 15 bar and 30 bar.

8. Method according to any one of claims 1 to 7, **characterised in that** in step e), the temperature of the working medium located in the cavity (5) is increased to a maximum temperature in the range between 300°C and 500°C, in particular between 330°C and 410°C.

9. Method according to any one of claims 1 to 8, **characterised in that** in step b), a plurality of separate workpieces (17, 17') are provided, which are inserted into the working space (8') of the press (1') in step c) and are connected to one another in step e), wherein a continuous hardened moulded part is formed from the workpieces (17, 17').

## Revendications

1. Procédé de fabrication de pièces moulées à partir d'un matériau composite à base de fibres comprenant les étapes suivantes :
a) Fourniture d'une presse (1, 1') ayant
- un premier outil de pressage (2),
- un deuxième outil de pressage (3), et
- une membrane (4),
- le premier outil de pressage (2) et le deuxième outil de pressage (3) étant mobiles l'un par rapport à l'autre,
- la membrane (4) étant reliée à l'un des outils de pressage (2),
- une cavité (5) pour un fluide de travail étant formée entre la membrane (4) et l'outil de pressage (2) relié à celle-ci,
- une chambre de travail (8, 8') pour une pièce ouvrée étant formée dans l'autre outil de pressage (3), et
- dans lequel le volume de la chambre de travail (8, 8') pouvant être modifié par un mouvement de la membrane (4) lorsque la presse (1, 1') est fermée,
b) la fourniture d'au moins une pièce ouvrée (17, 17') ayant un volume de pièce ouvrée (V_{W1}, V_{W1}'), une matrice et des fibres étant insérées à l'intérieur de la pièce ouvrée (17, 17'),
c) insertion de la pièce ouvrée (17, 17') dans la chambre de travail (8, 8') de la presse (1, 1'),
d) Fermeture de la presse (1, 1'), la chambre de travail (8, 8') adoptant un premier volume (V₁, V₁'),
e) Application d'une pression et/ou d'une température à la pièce ouvrée (17, 17') au moyen de la membrane (4), la chambre de travail (8, 8') adoptant un deuxième volume (V₂, V₂'), et une pièce moulée durcie étant créée à partir de la pièce ouvrée (17, 17'), et
f) Ouverture de la presse (1, 1') et retrait de la pièce moulée, **caractérisée en ce que** le premier volume (V₁, V₁') de la chambre de travail (8, 8') est inférieur au volume de la pièce ouvrée (V_{W1}, V_{W1}'), de sorte que la pièce ouvrée (17, 17') est déjà comprimée à l'étape d) et avant l'étape e).

2. Procédé selon la revendication 1, **caractérisé en ce que** le deuxième volume (V₂, V₂') de la chambre de travail (8, 8') est inférieur au volume de la pièce ouvrée (V_{W1}, V_{W1}'), de sorte que la pièce ouvrée (17, 17') est également comprimée pendant l'étape e).

3. Procédé selon la revendication 1, **caractérisé en ce qu'**au moins un noyau (18) ayant un volume de noyau (Vₖ₁) est fourni dans l'étape b), **en ce que** le noyau (18) est également inséré dans la chambre de travail (8') de la presse dans l'étape c), **en ce que** le premier volume (V₁') de la chambre de travail (8') est inférieur à la somme du volume de la pièce ouvrée (V_{W1}') et du volume de noyau (Vₖ₁), de sorte que la pièce (17, 17') est déjà comprimée à l'étape d) et avant l'étape e).

4. Procédé selon la revendication 3, **caractérisé en ce que** le deuxième volume (V₂') de la chambre de travail (8') est inférieur à la somme du volume de la pièce ouvrée (V_{W1}') et du volume de noyau (Vₖ₁), de sorte que la pièce (17, 17') est également comprimée pendant l'étape e).

5. Procédé selon l'une des revendications 1 à 4, **caractérisé en ce que** la membrane (4) est fabriquée en métal et présente, de préférence, une épaisseur comprise entre 0,05 mm et 0,5 mm, notamment entre 0,25 mm et 0,4 mm.

6. Procédé selon l'une des revendications 1 à 5, **caractérisé en ce que** la pression et/ou la température du fluide de travail dans la cavité (5) sont modifiées pendant l'étape e).

7. Procédé selon l'une des revendications 1 à 6, **caractérisé en ce que** la pression du fluide de travail se trouvant dans la cavité (5) est augmentée dans l'étape e) jusqu'à une pression maximale comprise entre 10 et 50 bar, notamment entre 15 et 30 bar.

8. Procédé selon l'une des revendications 1 à 7, **caractérisé en ce que** la température du fluide de travail se trouvant dans la cavité (5) est augmentée à une température maximale comprise entre 300 °C et 500 °C, notamment entre 330 °C et 410 °C dans l'étape e).

9. Procédé selon l'une des revendications 1 à 8, **caractérisé en ce que** plusieurs pièces ouvrées séparées (17, 17') sont fournies dans l'étape b) qui sont insérées dans la chambre de travail (8') de la presse (1') dans l'étape c) et qui sont assemblées entre elles dans l'étape e), ce qui permet de créer une pièce moulée durcie continue à partir des pièces ouvrées (17, 17').
